# EUROPÄISCHE PATENTSCHRIFT

(11) **EP 3 887 134 B1**
(45) Veröffentlichungstag und Bekanntmachung des Hinweises auf die Patenterteilung: **23.11.2022**
(21) Anmeldenummer: 19813295.3
(22) Anmeldetag: 29.11.2019
(51) Int. Cl.: B29C 70/44, B29D 99/00, B29L 31/08

(54) **VERFAHREN ZUR HERSTELLUNG EINER ROTORBLATTHALBWURZEL UND EINE HERSTELLUNGSFORM DAFÜR**
METHOD FOR PRODUCING A ROTOR BLADE ROOT HALF AND PRODUCTION MOLD FOR SAME
PROCÉDÉ POUR LA FABRICATION D'UNE DEMI-RACINE DE PALE DE ROTOR ET UN MOULE DE FABRICATION POUR CELLE-CI

(30) Priorität: 30.11.2018 DE 102018130550
(43) Veröffentlichungstag der Anmeldung: 06.10.2021
(73) Patentinhaber: TPI Technology Inc., Scottsdale AZ 85253 (US)
(72) Erfinder: MAROIS, Mathias, 10247 Berlin (DE); PASSOW, Matthias, 10439 Berlin (DE)
(74) Vertreter: HGF
(86) Internationale Anmeldenummer: PCT/EP2019/083057
(87) Internationale Veröffentlichungsnummer: WO 2020/109537

(56) Entgegenhaltungen:
- DE-A1-102009 056 978
- DE-A1-102016 014 491
- US-A1- 2012 080 142

## Beschreibung

Die Erfindung betrifft ein Verfahren zur Herstellung eines Bauteils eines Rotorblattes.

Die Erfindung betrifft auch eine Herstellungsform für ein Bauteil eines Rotorblattes. Verfahren zur Herstellung von Rotorblattbauteilen wie auch Herstellungsformen zur Durchführung derartiger Verfahren sind im Stand der Technik natürlich hinlänglich bekannt. Beispielsweise ist in der DE 10 2015 007977 A1 eine Herstellungsform zur Herstellung einer Rotorblattwurzel eines Rotorblattes offenbart.

Aus der DE 10 2009 056 978 A1 ist eine Vorrichtung und ein Verfahren zur Herstellung einer aus einem Faserverbundwerkstoff bestehenden Rumpfschale für ein Luftfahrzeug bekannt. Hierbei soll eine Form mittels Aktuatoren verstellbar sein.

Die DE 10 2016 014 491 A1 entspricht dem Oberbegriff des Anspruchs 1 bzw. 5 und betrifft die Herstellung von Faserverbundbauteilen und insbesondere ein Verfahren, bei dem eine Hilfsschichtfolge, die zumindest eine Absaugfolie aufweist, auf eine Auflagefläche einer Legehilfe aufgelegt wird. Auf die aufgelegte Hilfsschichtfolge wird zumindest eine Faserhalbzeuglage aufgelegt. Auf die zumindest eine aufgelegte Faserhalbzeuglage wird eine Negativform aufgelegt, so dass die zumindest eine aufgelegte Faserhalbzeuglage zwischen der Absaugfolie und der Negativform angeordnet ist. Durch Evakuieren eines Bereichs zwischen der Absaugfolie und der Negativform wird ein evakuierter Zustand erzeugt, so dass die zumindest eine Faserhalbzeuglage durch die Absaugfolie gegen die Negativform gepresst wird.

Aus der US 2012/0080142 bzw. der EP 2 436 512 B1 ist ein Verfahren zum Auflegen einer Vakuumfolie bekannt, bei dem die Vakuumfolie auf Faserlagen mittels eines verformbaren Stempels aufgelegt wird, wodurch ein faltenfreier Sitz der Vakuumfolie bewirkt werden soll. Üblicherweise werden Rotorblätter nicht in einer einzigen Herstellungsform hergestellt, sondern Bauteile des Rotorblattes wie die Rotorblatthalbschalen, die Rotorblattwurzel wie auch Gurte und Stege werden in separaten Herstellungsformen gefertigt und dann übereinandergelegt und in einem separaten Vakuuminfusionsverfahren (VARI) oder Laminierungsverfahren laminiert und zusammengeklebt.

Insbesondere bei der Herstellung der Rotorblattwurzel, beziehungsweise einer Rotorblatthalbwurzel, entsteht das Problem, dass die einzelnen Gelege- und/oder Gewebelagen, die für den Laminataufbau der Rotorblatthalbwurzel übereinandergelegt werden müssen, insbesondere an den oberen Rändern der Formschale der Rotorblatthalbwurzel beinahe senkrecht angeordnet werden müssen. Da die Auflagefläche der Formhalbschale am oberen Rand beinahe senkrecht verläuft, besteht die Gefahr, dass die Gelegelagen, auch wenn sie am Rand befestigt werden, heruntersacken oder zumindest Wellen bilden. Auch im sich anschließenden Laminierverfahren bliebe die Wellenbildung bestehen, und die Rotorblattwurzel kann nicht mehr im Rotorblatt verbaut werden und müsste wegen eines Mangels aussortiert werden.

Es ist die Aufgabe der vorliegenden Erfindung, ein eingangs genanntes Verfahren zur Verfügung zu stellen, das es ermöglicht, Bauteile eines Rotorblattes herzustellen, ohne dass dabei die Gefahr der Wellenbildung eingegangen wird.

Es ist auch Aufgabe der vorliegenden Erfindung, eine Herstellungsform zur Verfügung zu stellen, mit der ein derartiges Verfahren durchgeführt werden kann.

Die Aufgabe wird hinsichtlich des Verfahrens durch ein eingangs genanntes Verfahren mit den Merkmalen des Anspruchs 1 gelöst.

Erfindungsgemäß wird eine Vakuumfolie auf eine Positivform gelegt, auf die Vakuumfolie werden Schichten gelegt. Bei den Schichten kann es sich um Gewebe und/oder Gelegelagen handeln. Die Lagen können faserhaltig sein, beispielsweise Glasfasern oder Kohlenstofffasern aufweisen. Die Lagen können aber auch Sandwichkernmaterialien, Balsaholz o. A. umfassen. Der Begriff der "Lage" ist hier sehr weit zu verstehen. Die Lagen können sich Ober die gesamte Vakuumfolie erstrecken oder nur Teile der Vakuumfolie abdecken. Nach dem Auflegen der Lagen sowie möglicherweise weiterer Prozess- und Hilfsmaterialien auf die Vakuumfolie wird eine Negativform über die belegte Positivform verschwenkt. Danach wird die Vakuumfolie an der Negativform abgedichtet und ein Vakuum gegen die Negativform gezogen. Weil das Vakuum gegen die Negativform gezogen wird, drückt die Vakuumfolie gegen die auf ihr liegenden Lagen und drückt die Lagen gegen die Negativform. Dadurch werden die Lagen bewegungsstabil gegen die Negativform gesogen, und die Negativform kann mit den Lagen zurückverschwenkt werden. Erfindungsgemäß wird eine erste Auflagefläche der Positivform unternormal gebogen, und nach dem Belegen mit den Lagen und nachdem die Negativform über die Positivform verschwenkt worden ist wird die erste Auflagefläche in eine Normalform von innen nach außen ausgewalzt. Die Positivform ist günstiger Weise halb zylinderförmig ausgebildet, das heißt, sie weist die erste Auflagefläche auf, die im Wesentlichen halbzylinderförmig ausgeformt ist, wobei die erste Auflagefläche in einem Querschnitt zwischen einer strengen Kreisbogenform und einer elliptischen Bogenform hin und her verbogen werden kann. Gemäß Anspruch 1 ist die Positivform zunächst unternormal, d. h. hier im Querschnitt elliptisch dahingehend gebogen, dass die unteren, erdbodenseitigen Ränder der Halbzylinderauflagefläche nach innen gezogen beziehungsweise gebogen sind, so dass der gesamte Querschnitt aus der strengen Kreisbogenform in eine elliptische Form mit größerer Krümmung als die Kreisform verbogen wird. Die elliptische Form wird hier als unternormal bezeichnet. Auf die unternormal gebogene Positivform werden die Lagen, wie oben beschrieben, übereinandergelegt und gestapelt, und vorzugsweise, nachdem die Negativform über die Positivform verschwenkt wurde, gelangt die Negativform an einem Scheitelabschnitt mit den Lagen möglicherweise in Kontakt. Ein Abstand zwischen Positiv- und Negativform ist so gewählt, dass die Lagen den Bewegungen der Positivform folgen, sie können, müssen aber nicht, in die Negativform gedrückt werden. Die Positivform wird von innen nach außen, das heißt vom Scheitelabschnitt zu den Randabschnitten ausgewalzt, und somit werden mögliche Wellen von innen nach außen aus dem Lagenstapel herausgedrückt.

Vorzugsweise werden die Lagen und die Vakuumfolie zunächst an der Positivform festgeklemmt. Nachdem die Vakuumfolie und gegebenenfalls Prozesslagen als Infusionshilfsmedien auf die Positivform gelegt wurden und auf die Vakuumfolie die Lagen gelegt wurden, werden die Lagen und die Vakuumfolie entlang ihrer unteren, erdbodenseitigen Längsränder an beiden Seiten der Positivform an einem Randabschnitt festgeklemmt. Nachdem die Lagen und die Vakuumfolie festgeklemmt sind, wird die Negativform auf den Lagenstapel abgesenkt, bis die Negativform am Scheitelabschnitt in Kontakt mit dem Lagenstapel gerät, und nachfolgend wird die Positivform von der unternormal gebogenen Form in die Normalform ausgewalzt. Nach dem Auswalzen der Positivform liegen die Lagen auf ihrer nominalen Position, die Lagen sind zwischen der ersten Auflagefläche und einer zweiten Auflagefläche der Negativform festgeklemmt, und die Vakuumfolie wird dann zusammen mit dem Lagenstapel am Randabschnitt der Positivform gelöst, und die Folie wird umgeklappt und an der Negativform luftdicht verklebt oder festgeklemmt.

Anschließend wird ein Vakuum gegen die Negativform gezogen. Dadurch werden die Lagen an der zweiten Auflagefläche der Negativform festgesogen und komprimiert, und die Negativform kann, ohne dass die Lagen verrücken, zurückverschwenkt werden. Die Aufgabe wird hinsichtlich der Herstellungsform durch eine eingangs genannte Herstellungsform mit den Merkmalen des Anspruchs 5 gelöst.

Die erfindungsgemäße Herstellungsform eignet sich zur Durchführung jedes der obengenannten Verfahren, umgekehrt kann jedes der obengenannten Verfahren mit den oben oder einer der nachfolgend beschriebenen Herstellungsformen durchgeführt werden.

Die Herstellungsform ist zur Herstellung eines Bauteils eines Rotorblattes, insbesondere einer Rotorblattwurzel oder einer Rotorblattteilwurzel, geeignet. Die Herstellungsform umfasst eine Positivform und eine Negativform, die über die Positivform schwenkbar ist, sowie einen Vakuummechanismus, der bei über die Positivform verschwenkter Negativform betätigbar ist.

Der Vakuummechanismus umfasst eine Vakuumfolie, die an der Negativform abgedichtet werden kann, sowie einen Saugmechanismus, der die Luft zwischen einer zweiten Auflagefläche der Negativform und der Vakuumfolie absaugt. Der Vakuummechanismus ist bereits betätigbar, wenn die Herstellungsform nach unten zum Erdboden geöffnet über der Positivform angeordnet ist.

Gemäß Anspruch 5 weist die Positivform eine bewegliche erste Auflagefläche auf, die von einer unternormalen Form auf eine Normalform von innen nach außen auswalzbar ist.

Dazu sind vorzugsweise entlang eines Querschnitts der Positivform Stellglieder angeordnet, die mit einer zentralen Steuerung verbunden sind. Die Stellglieder sind zwischen der ersten Auflagefläche und einem ersten Gestell vorgesehen und ermöglichen es, die erste Auflagefläche relativ gegenüber dem ersten Gestell zu verbiegen und damit den Querschnitt zwischen einer unternormalen Form, das heißt einer stärker als die Halbzylinderform gekrümmten Form, und der Normalform, das heißt der streng halbzylinderförmigen Form, hin und her zu verbiegen.

Durch nachfolgendes Betätigen der Stellglieder, vorzugsweise sukzessive von einem Scheitelabschnitt zu Randabschnitten der ersten Auflagefläche, wird eine Walzbewegung vom Scheitelpunkt zu den Rändern erzeugt, die möglicherweise auftretende Wellen in den Lagen zum Rand herausdrückt.

Günstigerweise ist zwischen der Negativform und der Positivform ein Hebe- und Senksystem angeordnet, mit dem ein Abstand der beiden Formen zueinander verstellbar ist. Die Positivform umfasst die erste Auflagefläche sowie ein erstes Gestell, die Negativform eine zweite Auflagefläche sowie ein zweites Gestell. Das Hebe- und Senksystem ist vorzugsweise in Form von Stelleinrichtungen, pneumatischen oder hydraulischen Hubzylindern o. Ä. zwischen dem ersten und zweiten Gestell vorgesehen und ermöglicht es, das erste und zweite Gestell relativ zueinander zu bewegen. Gegenüber dem ersten Gestell ist die erste Auflagefläche fixiert beziehungsweise ebenfalls verstellbar angeordnet, gegenüber dem zweiten Gestell ist die zweite Auflagefläche fixiert angeordnet, so dass über eine Bewegung des ersten und zweiten Gestells gegeneinander die erste und zweite Auflagefläche gegeneinander verstellbar sind, so dass zwischen den beiden Auflageflächen der dort angeordnete Stapel an Lagen zur Herstellung des Rotorblattbauteils von beiden Seiten umschlossen auf seiner nominalen Position gehalten werden kann.

Günstigerweise weist die Positivform entlang von Randabschnitten Klemmeinrichtungen für die Lagen und die Vakuumfolie auf, mit denen untere Lagenränder und untere Vakuumfolienränder an der Positivform vorübergehend festgeklemmt werden können.

Die Erfindung wird anhand eines Ausführungsbeispiels in zwei Figuren beschrieben. Dabei zeigen:
Fig. 1 eine Schnittansicht einer erfindungsgemäßen Herstellungsform mit unternormal gebogener Positivform und über der Positivform angeordneter Negativform,
Fig. 2 die Herstellungsform in Fig. 1 mit normal gebogener Positivform und über der Positivform angeordneter Negativform.

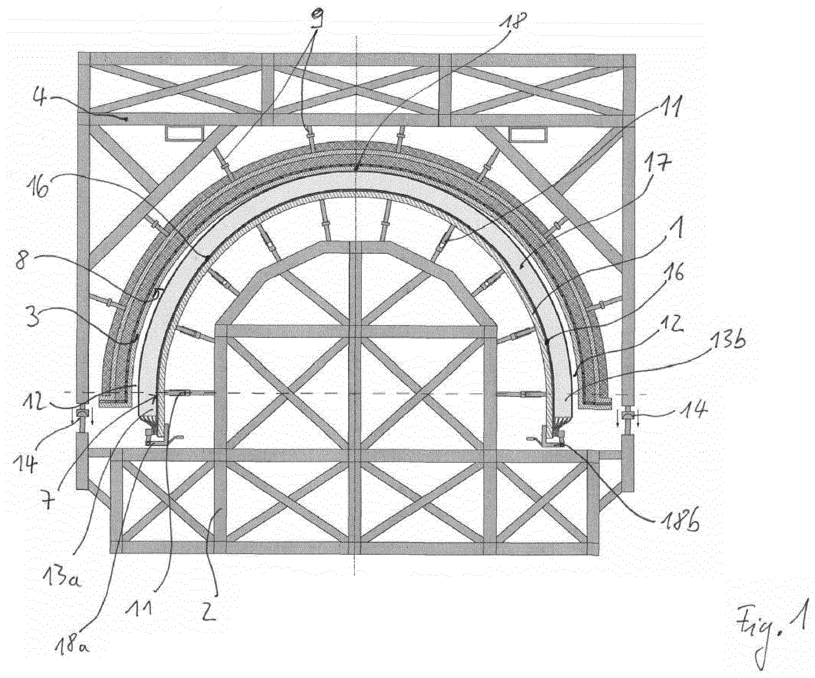

Die erfindungsgemäße Herstellungsform umfasst eine Positivform 1, die an einem ersten Gestell 2 befestigt ist, sowie eine Negativform 3, die an einem zweiten Gestell 4 befestigt ist. Das erste und das zweite Gestell 2, 4 sind hier gegeneinander gelenkig verbunden, derart, dass die Negativform 3, wie in Fig. 1 dargestellt, im zugeklappten Zustand über die Positivform 1 geklappt werden kann und im aufgeklappten Zustand um ein nicht dargestelltes Gelenk herum neben das erste Gestell 2 und die Positivform 1 geklappt werden kann. Es sind aber auch andere z. B. aufgelöste Bauarten denkbar, bei denen die Negativform 3 mittels eines Kranes oder anderer Hebemittel über die Positivform gehoben werden kann.

Die Positivform 1 weist eine erste Auflagefläche 7 auf, die zylinderförmig ausgebildet ist. Ein Querschnitt der Zylinderfläche ist zwischen der strengen Kreisbogenform und einer elliptischen Form kontinuierlich verstellbar.

Die Negativform 3 weist eine zweite Auflagefläche 8 auf, die zylindrisch ausgebildet ist. Die zweite Auflagefläche 8 braucht in ihrer Krümmung im Querschnitt nicht verstellbar zu sein. Die Negativform 3 ist mit Abstandshaltern 9 an dem zweiten Gestell 4 positionsfest befestigt. Alternativ können auch die Abstandhalter 9 längenverstellbar sein.

Die Positivform 1 ist hingegen über hydraulisch, elektrisch oder pneumatisch verstellbare Stellglieder 11 mit dem ersten Gestell 2 verstellbar verbunden, derart, dass durch Ein- und Ausfahren der verstellbaren Stellglieder 11, wie in Fig. 1 dargestellt, die erste Auflagefläche 7 aus ihrer exakten, im Querschnitt kreisbogenförmigen Gestalt in eine elliptische Gestalt verbogen werden kann, so dass ein vergrößerter Spalt 12 zwischen der Positivform 1 und der Negativform 3 ausgebildet wird. Die Stellglieder 11 verstellen an ihrer jeweiligen Position einen Abstand der ersten Auflagefläche 7 zum ersten Gestell 2; an anderen Positionen bleibt der Abstand zwischen der ersten Auflagefläche 7 und dem ersten Gestell 2 gleich.

In Fig. 1 ist dargestellt, dass die verstellbaren Stellglieder 11 entlang des Scheitelabschnitts 18 und entlang zweier unterer Randabschnitte 13a, 13b der Positivform 1 angeordnet sind. Die Stellglieder 11 werden gesteuert vom Scheitelabschnitt 18 zu den Randabschnitten ausgefahren und die Lagen 17 dadurch ausgewalzt. Das erste und das zweite Gestell 2, 4 sind über ein Hebe- und Senksystem 14, das zwischen dem ersten und zweiten Gestell 2, 4 wirkt, gegeneinander verfahrbar.

Die erfindungsgemäße Herstellungsform eignet sich insbesondere zur Herstellung von vorgefertigten Rotorblattwurzeln, die nachfolgend in Rotorblättern verbaut werden. Zur Herstellung der vorgefertigten Bauteile, sogenannter Prefabs, eignet sich die erfindungsgemäße Herstellungsform in Bezug auf Rotorblattwurzeln. In anderen Abwandlungen kann die Herstellungsform auch zur Herstellung anderer Prefabs verwendet werden.

Auf dem ersten Gestell 2 ist die Positivform 1 angeordnet. Die erste Auflagefläche 7 der Positivform 1 ist halbzylindrisch ausgebildet, wobei die erste Auflagefläche 7 in ihrem Querschnitt verstellbar ist und aus der exakt kreisbogenförmigen Querschnittsform in eine elliptische Querschnittsform mit den nach innen eingezogenen, unteren Randabschnitten 13a, 13b verstellbar ist. Die Positivform 1 besteht aus einem dünnen Laminat, das flexibel ist, oder auch aus Blech oder anderen geeigneten Materialien.

Zur Herstellung der halben Rotorblattwurzel wird auf die Positivform 1 zunächst direkt auf die erste Auflagefläche 7 eine Vakuumfolie 16 gelegt, die die erste Auflagefläche 7 vorzugsweise vollständig abdeckt.

Auf die Vakuumfolie 16 werden unterschiedliche Gewebe- und/oder Gelegelagen 17 übereinanderliegend oder auch nebeneinanderliegend aufgebracht. Es kann sich dabei um glasfaserhaltige Lagen, kohlenstofffaserhaltige Lagen, textile Gewebelagen oder Ähnliches handeln. Die Gewebe- und/oder Gelegelagen 17 überdecken die erste Auflagefläche 7 vorzugsweise ebenfalls vollständig. Ihr seitlicher Rand wird auf beiden Längsseiten der ersten Auflagefläche 7 mit jeweils einer Klammer 18a, 18b festgespannt. Die Gewebe- und/oder Gelegelagen 17 sind somit übereinandergestapelt, an ihren seitlichen Rändern fest gespannt und rutschfest auf der ersten Auflagefläche 7 angeordnet. Nachdem die Folge der Gewebe- und/oder Gelegelagen 17 zur Ausbildung der Rotorblattwurzel-Prefabs vervollständigt ist, wird mittels des Schwenkmechanismus die Negativform 3 über die Positivform 1 verschwenkt und mittels des Hebe- und Senksystem 14 soweit herabgelassen, bis an dem Scheitelabschnitt der übereinander angeordneten Positiv- und Negativform 1, 3 ein Kontakt zwischen der zweiten Auflagefläche 8 der Negativform 3 und dem Stapel der Gewebe- und/oder Gelegelagen 17 zustande kommt. Diese Position ist in Fig. 1 dargestellt.

Nachfolgend wird die Positivform 1 sowohl zum linken als auch zum rechten Randabschnitt 13a, 13b hin ausgewalzt, das heißt, die Stellglieder 11 werden ausgehend von den oberen Stellgliedern nacheinander zu den unteren Stellgliedern 11 ausgefahren, um die erste Auflagefläche 7 von der unternormalen elliptischen Form in eine normale Kreisform zu biegen. Dabei wird jedoch darauf geachtet, dass ein Kontakt der zweiten Auflagefläche mit dem Stapel Gewebe- und/oder Gelegelagen 17 stetig von einem Scheitelabschnitt 18 zu den beiden Randabschnitten 13a, 13b nach unten verläuft. Durch die Walzbewegung ist gewährleistet, dass im Lagenaufbau keine Wellen ausgebildet werden, sondern sich mögliche Wellen vom Scheitelabschnitt 18 zu den Randabschnitten 13a, 13b hin herausdrücken.

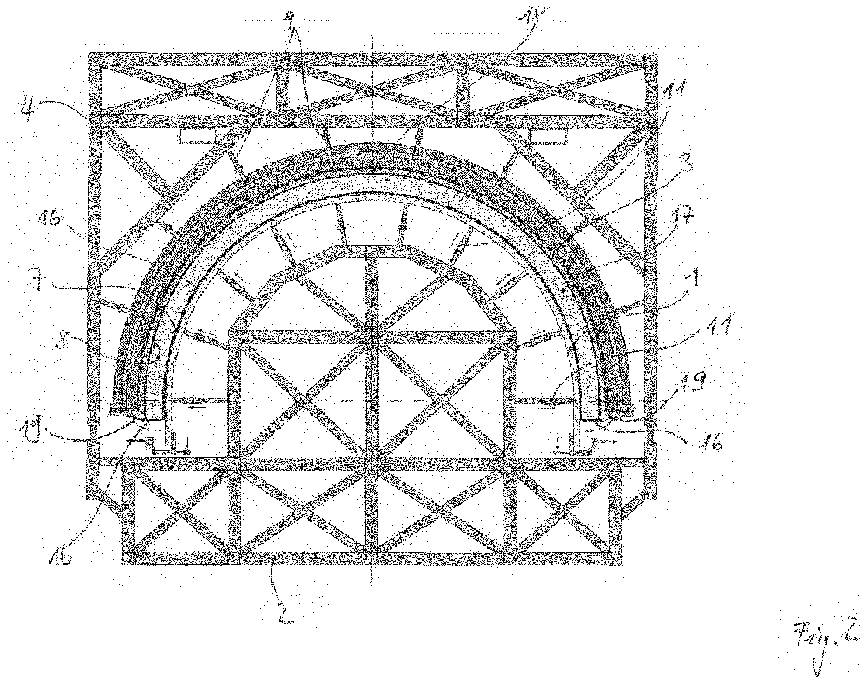

Nachdem die erste Auflagefläche 7 ebenfalls eine exakt kreisbogenförmige Ausbildung angenommen hat und die zweite Auflagefläche 8 in Kontakt, der sich über die gesamte zweite Auflagefläche 8 verteilt, auf dem Aufbau von Gewebe- und/oder Gelegelagen 17 aufliegt, werden die Klammern 18a, 18b der Positivform 1 gelöst, und die Vakuumfolie 16 wird gelöst und umgeklappt und an der Negativform 3 luftdicht mittels eines Klebebandes 19 o. Ä. befestigt. Der beschriebene Zustand ist in der Fig. 2 dargestellt. Gleiche Bezugszeichen bedeuten gleiche Merkmale in der Fig. 2.

In einem nachfolgenden Schritt wird die Negativform 3 wieder verschwenkt und die Herstellungsform aufgeklappt, so dass die Negativform 3 in einer nach oben geöffneten Anordnung neben der Positivform 1 angeordnet ist und der Aufbau an Gewebe- und/oder Gelegelagen 17 in herkömmlicher Weise von oben zugänglich ist. Vor dem Verschwenken wird ein Vakuum gegen die Negativform 3 gezogen. Dadurch können die Gewebe- und/oder Gelegelagen 17 dann bewegungsstabil gegenüber der zweiten Auflagefläche 8 verschwenkt werden.

Nach dem Verschwenken der Negativform 3 wird ein Infusionsverfahren in herkömmlicher Weise in einem Lagenaufbau der Gewebe- und/oder Gelegelagen 17, der sich über der Negativform 3 ausbildet, durchgeführt, und es wird eine Rotorblatthalbwurzel hergestellt. Die Rotorblatthalbwurzel wird als Prefab dann in eine Rotorblatthalbschale eingelegt und mit weiteren Bauteilen wie Gurten, Stegen oder Ähnlichem zur Rotorblatthalbschale laminiert. Die zwei Rotorblatthalbschalen werden anschließend ebenfalls mittels einer schwenkbaren Herstellungsform übereinanderverschwenkt und zu einem Rotorblatt verklebt.

Die erfindungsgemäße Herstellungsform weist insbesondere eine nicht dargestellte zentrale Steuerung für die Stellglieder 11 auf, die die Form der ersten Auflagefläche 7 verbiegen.

### Bezugszeichenliste

- 1: Positivform
- 2: erstes Gestell
- 3: Negativform
- 4: zweites Gestell

- 7: erste Auflagefläche
- 8: zweite Auflagefläche
- 9: Abstandshalter

- 11: Stellglieder
- 12: Spalt
- 13a: unterer Randabschnitt
- 13b: unterer Randabschnitt
- 14: Hebe- und Senksystem

- 16: Vakuumfolie
- 17: Gewebe- und/oder Gelegelagen
- 18: Scheitelabschnitt
- 18a: Klammer
- 18b: Klammer
- 19: Klebeband

## Patentansprüche

1. Verfahren zur Herstellung eines Bauteils eines Rotorblattes, indem eine Vakuumfolie (16) auf eine Positivform (1) gelegt wird,
Lagen (17) auf die Positivform (1) gelegt werden,
eine Negativform (3) über die belegte Positivform (1) verschwenkt wird, danach die Vakuumfolie (16) an der Negativform (3) abgedichtet wird, danach ein Vakuum gegen die Negativform (3) gezogen wird,
danach die Negativform (3) mit den Lagen (17) zurückverschwenkt wird,
**dadurch gekennzeichnet, dass** die Positivform (1) unternormal gebogen wird derart,
dass die unteren Ränder der Auflagefläche nach innen gezogen beziehungsweise gebogen sind und nach dem Ablegen der Lagen (17) und nachdem die Negativform (3) über die Positivform (1) verschwenkt worden ist in eine Normalform von innen nach außen ausgewalzt wird.

2. Verfahren nach Anspruch 1, **dadurch gekennzeichnet, dass** die Negativform (3) auf die Positivform (1) abgesenkt wird.

3. Verfahren nach Anspruch 1 oder 2, **dadurch gekennzeichnet, dass** die Lagen (17) und die Vakuumfolie (16) an der Positivform (1) festgeklemmt werden.

4. Verfahren nach Anspruch 1,2 oder 3, **dadurch gekennzeichnet, dass** ein Infusionsverfahren durchgeführt wird.

5. Herstellungsform für ein Bauteil eines Rotorblattes, mit einer Positivform (1), einer Negativform (3), die über die Positivform (1) schwenkbar ist, einem Vakuummechanismus, der bei über die Positivform (1) verschwenkter Negativform (3) betätigbar ist, **dadurch gekennzeichnet, dass** die Positivform (1) eine bewegliche erste Auflagefläche (7) aufweist, die von einer unternormalen Form derart, dass die unteren, Ränder der Auflagefläche nach innen gezogen beziehungsweise gebogen sind, auf eine Normalform von innen nach außen auswalzbar ist.

6. Herstellungsform nach Anspruch 5, **dadurch gekennzeichnet, dass** entlang eines Querschnitts der Positivform (1) Stellglieder (11) angeordnet sind, die mit einer zentralen Steuerung verbunden sind.

7. Herstellungsform nach einem der Ansprüche 5 bis 6, **dadurch gekennzeichnet, dass** zwischen der Negativform (3) und der Positivform (1) ein Abstandsmechanismus (14) angeordnet ist, mit dem ein Abstand der beiden Formen (3, 1) zueinander verstellbar ist.

8. Herstellungsform nach einem der Ansprüche 5 bis 7,**dadurch gekennzeichnet, dass** die Positivform (1) entlang von Randabschnitten (13a,13b) Klammern (18a, 18b) für die Lagen (17) und die Vakuumfolie (16) aufweist.

## Claims

1. Method for producing a component of a rotor blade, in which a vacuum film (16) is placed on a positive mould (1), layers (17) are placed on the positive mould (1), a negative mould (3) is pivoted over the lined positive mould, after which the vacuum film (16) is sealed on the negative mould (3), after which a vacuum is drawn against the negative mould (3), the negative mould (3) with the layers (17) is then pivoted back, **characterized in that** the positive mould (1) is bent subnormally in such a manner that the lower edges of the bearing surface are drawn or bent inwardly and following placement of the layers (17) and once the negative mould (3) has been pivoted over the positive mould (1) is rolled outwardly from within into a standard mould.

2. Method according to Claim 1, **characterized in that** the negative mould (3) is lowered onto the positive mould (1).

3. Method according to Claim 1 or 2, **characterized in that** the layers (17) and the vacuum film (16) are clamped in position on the positive mould (1).

4. Method according to Claim 1, 2 or 3, **characterized in that** an infusion method is carried out.

5. Production mould for a component of a rotor blade, having a positive mould (1), a negative mould (3) which can be pivoted over said positive mould (1), a vacuum mechanism which can be actuated when the negative mould (3) is pivoted over the positive mould (1), **characterized in that** the positive mould (1) has a movable first bearing surface (7) which can be rolled from a subnormal mould, in such a manner that the lower edges of said bearing surface are drawn or bent inwardly, onto a normal mould outwardly from within.

6. Production mould according to Claim 5, **characterized in that** actuators (11) which are connected to a central control are arranged along a cross section of the positive mould (1).

7. Production mould according to one of Claims 5 to 6, **characterized in that** a spacing mechanism (14), by means of which a space between the two moulds (3, 1) is adjustable in respect of one another, is arranged between the negative mould (3) and the positive mould (1).

8. Production mould according to one of Claims 5 to 7, **characterized in that** the positive mould (1) has clamps (18a, 18b) for the layers (17) and the vacuum film (16) along peripheral portions (13a,13b).

## Revendications

1. Procédé de fabrication d'un composant d'une pale de rotor, dans lequel une feuille sous vide (16) est posée sur un moule positif (1),
des couches (17) sont posées sur le moule positif (1), un moule négatif (3)
est pivoté sur le moule positif (1) recouvert, la
feuille sous vide (16) est ensuite scellée au moule négatif (3), un vide est ensuite tiré contre le moule négatif (3),
le moule négatif (3) avec les couches (17) est ensuite pivoté vers l'arrière, **caractérisé en ce que** le moule positif (1) est plié de manière inférieure à la normale de telle sorte que les bords inférieurs de la surface d'appui sont tirés ou pliés vers l'intérieur et, après la dépose des couches (17) et après que
le moule négatif (3) a été pivoté au-dessus du moule positif (1) en une forme normale de l'intérieur est laminé vers l'extérieur en une forme normale.

2. Procédé selon la revendication 1, **caractérisé en ce que** le moule négatif (3) est abaissé sur le moule positif (1).

3. Procédé selon la revendication 1 ou 2, **caractérisé en ce que** les couches (17) et la feuille sous vide (16) sont serrées sur le moule positif (1).

4. Procédé selon la revendication 1, 2 ou 3, **caractérisé en ce qu'**un procédé par infusion est mis en œuvre.

5. Moule de fabrication pour un composant d'une pale de rotor, comprenant un moule positif (1), un moule négatif (3) qui peut pivoter au-dessus du moule positif (1), un mécanisme à vide qui peut être actionné lorsque le moule négatif (3) est pivoté au-dessus du moule positif (1), **caractérisé en ce que** le moule positif (1) présente une première surface d'appui mobile (7) qui peut être laminée de l'intérieur vers l'extérieur à partir d'un moule inférieur à la normale de telle sorte que les bords inférieurs de la surface d'appui sont tirés ou pliés vers l'intérieur, en une forme normale.

6. Moule de fabrication selon la revendication 5, **caractérisé en ce que** le long d'une section transversale du moule positif (1) sont disposés des organes de réglage (11) qui sont reliés à une commande centrale.

7. Moule de fabrication selon l'une des revendications 5 à 6, **caractérisé en ce qu'**un mécanisme d'écartement (14) est disposé entre le moule négatif (3) et le moule positif (1), permettant de régler un écartement entre les deux moules (3, 1).

8. Moule de fabrication selon l'une des revendications 5 à 7, **caractérisé en ce que** le moule positif (1) présente le long de sections de bord (13a, 13b) des pinces (18a, 18b) pour les couches (17) et la feuille sous vide (16).
